(19) Europäisches Patentamt
European Patent Office
Office européen des brevets

(11) **EP 4 624 265 A1**

(12) **EUROPÄISCHE PATENTANMELDUNG**

(43) Veröffentlichungstag:
**01.10.2025  Patentblatt 2025/40**

(21) Anmeldenummer: **24167330.0**

(22) Anmeldetag: **28.03.2024**

(51) Internationale Patentklassifikation (IPC):
**B60R 16/03** (2006.01)     **B60R 16/033** (2006.01)
**H02H 1/00** (2006.01)     **H03K 17/06** (2006.01)

(52) Gemeinsame Patentklassifikation (CPC):
**B60R 16/03**; B60R 16/033

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Lisa Dräxlmaier GmbH**
**84137 Vilsbiburg (DE)**

(72) Erfinder: **Wortberg, Michael**
**84405 Dorfen (DE)**

(54) **ELEKTRONISCHE STROMVERTEILERANORDNUNG SOWIE VERFAHREN ZUM BETREIBEN EINER SOLCHEN STROMVERTEILERANORDNUNG**

(57)     Die Erfindung betrifft eine elektronische Stromverteileranordnung für ein Fahrzeug-Bordnetz, mit zumindest einem von einer Bordnetz-Batterie (1) kommenden Lastpfad (5), der sich in zumindest einen oder mehrere Lastkanäle (a, b, c, d) aufteilt, an die jeweils elektrische Verbraucher (9) angeschlossen sind, wobei jeder der Lastkanäle (a, b, c, d) unterteilt ist in eine auf eine Leiterplatte (13) applizierte Leiterbahn (Ba, Bb, Bc, Bd) und in eine zum Verbraucher (9) führende Versorgungsleitung (La, Lb, Lc, Ld), wobei der Lastpfad (5) eine Schalteinheit (11) aufweist, die bei einer thermischen Überlastung einer der Versorgungsleitungen (La, Lb, Lc, Ld) den Lastpfad (5) abschaltet. Erfindungsgemäß ist der Schalteinheit (11) eine Auswerteeinrichtung (17) zugeordnet, mittels der auf der Grundlage der Leiterbahn-Temperaturen ($T_{Ba}$, $T_{Bb}$, $T_{Bc}$, $T_{Bd}$) der Leiterbahnen (Ba, Bb, Bc, Bd) auf eine thermische Überlastung einer der Versorgungsleitungen (La, Lb, Lc, Ld) rückschließbar ist.

**Fig. 2**

**Detail X:**

**Beschreibung**

**Technisches Gebiet**

Die Erfindung betrifft eine elektronische Stromverteileranordnung für ein Fahrzeug-Bordnetz nach dem Oberbegriff des Anspruches 1 sowie ein Verfahren zum Betrieben einer solchen elektronischen Stromverteileranordnung nach dem Oberbegriff des Anspruches 9.

**Stand der Technik**

In einem modernen Fahrzeug ist im Fahrzeug-Bordnetz die 12V-Verteilung nicht mehr mit einer Stromverteilung mit Schmelzsicherungen realisiert, sondern mittels einer elektronischen Stromverteileranordnung. Eine gattungsgemäße elektronische Stromverteileranordnung weist zumindest einen von einer Bordnetz-Batterie kommenden Lastpfad auf, der sich in zumindest zwei Lastkanäle aufteilt, die jeweils zu elektrischen Verbrauchern geführt sind. Die elektronische Stromverteileranordnung weist zur Fehlerabschaltung Schalteinheiten auf, die als Transistor-Schaltungen realisiert sind.

Der Ersatz einer klassischen Stromverteileranordnung mit Schmelzsicherungen durch die elektronische Stromverteileranordnung ist wie folgt motiviert: Um die Bildung von Unterspannungs-Rückwirkungen auf Funktionssicherheits-Einheiten (FUSI-Funktionen) durch die Propagation von Kurzschluss-Unterspannungen anderer Lasten im Bordnetz zu verhindern, muss im Fehlerfall eine schnelle Trennung über einen schnellen Transistor-Schalter erfolgen. Des Weiteren müssen die angeschlossenen Leitungen gegen thermische Überlast durch quasistationäre Überlast geschützt werden.

Die Fehlerabschaltung soll zudem kanalselektiv sein, indem nur der fehlerbehaftete Lastkanal abgeschaltet wird. Es muss außerdem vermieden sein, dass ein übergeordnetes Schaltelement vor oder mit dem fehlerbehafteten Lastkanal abschaltet und somit ganze Bordnetzanteile von der Versorgung getrennt werden. Mit der Einführung einer Lithium-Ionen-Bordnetz-Batterie ergeben sich besonders hohe Anforderungen an die Fehlerbeherrschung im Bordnetz, da zur Verhinderung einer sicherheitskritischen thermischen Überlast ein schnellschaltender Batterie-Schutzschalter mit relativ geringer Abschaltschwelle vorgesehen ist.

Bei der aus dem Stand der Technik bekannten elektronischen Stromverteileranordnung kann in jedem Lastkanal ein Mosfet-Schalter angeordnet sein, um eine kanalselektive elektronische Absicherung bereitzustellen. Der konstruktive Aufwand sowie die Herstellungskosten für eine solche Stromverteileranordnung sind vergleichsweise hoch, da jede der bis zu 300 Schmelzsicherungen in einer klassischen Stromverteileranordnung des Fahrzeugs durch einen elektronischen Mosfet-Schalter (eFUSE) ersetzt werden muss. Jeder dieser Mosfet-Schalter ist mit einer Strommessung, Stromauswertung und Stromabschaltung ausgestattet.

Über die Strommessung wird indirekt auf die Temperatur der an dem jeweiligen Lastkanal angeschlossenen Versorgungsleitung geschlossen, die zu einem elektrischen Verbraucher führt. Wird anhand der Strommessung ein Überschreiten einer zu den thermischen Eigenschaften der Leitung passenden Strom/Zeit-Charakteristik ($I^2t$) erkannt, so wird der betreffende Lastkanal abgeschaltet. Bei der auf der Stromwert/Zeit-Charakteristik basierenden Absicherung können nicht erforderliche Abschaltungen erfolgen, da die Umgebungstemperatur bei der Anwendung der Charakteristik nicht einbezogen wird. Niedrige Umgebungstemperaturen würden das Tragen von hohen Strömen ohne thermische Überlast der Leitung ermöglichen. Des Weiteren ist die zugrundeliegende Strommessung toleranzbehaftet, und da der Strom im Quadrat in die Zeit/Strom-Charakteristik ($I^2t$) eingeht, ergeben sich entsprechend ausgedehnte Toleranzbänder. Diese Sachverhalt führt zu einem breiten Abschalt-Korridor in der elektronischen Absicherung.

**Beschreibung der Erfindung**

Die Aufgabe der Erfindung besteht darin, eine elektronische Stromverteileranordnung für ein Fahrzeug-Bordnetz sowie ein Verfahren zum Betreiben einer solchen elektronischen Stromverteileranordnung bereitzustellen, die im Vergleich zum Stand der Technik konstruktiv einfacher und kostengünstiger aufgebaut ist.

Die Aufgabe ist durch die Merkmale des Anspruches 1 oder 9 gelöst. Bevorzugte Weiterbildungen der Erfindung sind in den Unteransprüchen offenbart.

Die Erfindung betrifft eine elektronische Stromverteileranordnung für ein Fahrzeug-Bordnetz, bei der sich ein von einer Bordnetz-Batterie kommender Lastpfad in zumindest zwei Lastkanäle aufteilt. Jeder dieser Lastkanäle ist zu einem elektrischen Verbraucher geführt. Zudem ist jeder dieser Lastkanäle unterteilt in eine auf einer Leiterplatte (PCB) applizierte Leiterbahn und in eine daran, insbesondere über einen modularen Stecker, angeschlossene, von der Leiterplatte separate Versorgungsleitung, die zum jeweiligen Verbraucher führt. Der Lastpfad weist eine Schalteinheit auf, die bei einer thermischen Überlastung einer der Versorgungsleitungen den Lastpfad abschaltet. Die Schalteinheit kann eine auf der Leiterplatte applizierte Transistor-Schaltung sein. Gemäß dem kennzeichnenden Teil des Anspruches 1 ist der Schalteinheit eine Auswerteeinrichtung zugeordnet, mittels der auf der Grundlage der Leiterbahn-Temperaturen der auf der Leiterplatte applizierten Leiterbahnen auf eine thermische Überlastung einer der Versorgungsleitungen rückschließbar ist.

Erfindungsgemäß ist daher eine Gruppe von Verbrauchern (eine Gruppe von insgesamt zum Beispiel zwanzig Verbrauchern) auf einen gemeinsamen Mosfet-Schalter (d.h. die Schalteinheit) zusammengelegt. Daraus ergibt sich eine Kostenreduktion gegenüber einer Einzelabsicherung jedes der Lastkanäle, da ein Mosfet-Schalter für mehrere Verbraucher günstiger ist als zum Beispiel zwanzig Einzel-Mosfet-Schalter mit entsprechender Stromauswertung und Stromabschaltung.

Mittels der Erfindung kann sehr effizient auf die Temperatur einer angeschlossenen Versorgungsleitung rückgeschlossen werden. Dies erfolgt bevorzugt über eine Matrix-Temperaturmessung auf dem Schaltungsträger bzw. der Leiterplatte, indem die Temperaturen der dort angebrachten Leiterbahnen gemessen werden. Über eine Matrizen-Operation, die die Querwirkung der Erwärmungen der Leiterbahnen untereinander und die Mosfet-Wärme kompensiert, wird direkt auf die Temperatur einer einzelnen Versorgungsleitung zurückgeschlossen. Da erfindungsgemäß von den Leiterbahn-Temperaturen direkt auf die Temperatur jeder der angeschlossenen Versorgungsleitungen geschlossen wird, kann eine aufwendige Strommessung entfallen. Die erfinderische Lösung ermöglicht somit eine Unterscheidung zwischen der Belastung aller Lastkanäle im erlaubten Lastbereich und der thermischen Überlast einer einzelnen Versorgungsleitung durch die Auswertung einer thermischen Matrix.

Vorteilhaft wird daher im Vergleich zu bekannten elektronischen Stromverteilanordnungen eine erhebliche Kostenreduktion erreicht, sowie eine erhöhte Netto-Stromtragfähigkeit einer Leitung vor einer erforderlichen thermischen Abschaltung.

Konstruktiv vorteilhaft ist auf dem Schaltungsträger zur Verbindung von Leiterbahnen mit zugeordneten Versorgungsleitungen eine modulare Steckeraufnahme angeordnet, in den je nach Fahrzeugausrüstung benötigte Versorgungsleitungen mit endseitigen Steckerpins einsteckbar sind und Module je nach Konfiguration einsetzbar werden.

Der modulare Stecker kann mit einer Vielzahl von Steckeranschlüssen ausgerüstet sein, die bei einem Fahrzeug insbesondere mit vielen Funktionen und Verbrauchern allesamt belegt sein können. Bei gleichem Fahrzeugtyp mit kleinerem Ausrüstungspaket können dagegen Steckerplätze des modulare Steckers oder gesamte Module des Steckers nicht belegt sein. Es können somit gleiche Schaltungsträger für unterschiedlich ausgerüstete Fahrzeuge vorgehalten werden. Die erfindungsgemäße leitungsselektive Überlasterkennung funktioniert auch dann, wenn Versorgungsleitungen unterschiedlicher Querschnitte mit den Leiterbahnen verbunden sind.

Der erfindungsgemäße Schalttransistor kann als Hochstrom-Mosfet-Schalter für eine Lastaufnahme und Schaltung für die Summe der Größe der betriebsmäßig möglichen und zulässigen Lasten der angeschlossenen Versorgungsleitungen ausgelegt sein.

Die Verbraucher der am Stromverteiler mit einer temperaturabhängigen Sicherungsabschaltung angeschlossenen Verbraucher-Gruppe können Verbraucher mit Komfortfunktionen oder zumindest ohne kritische Funktionen für eine Fahrzeug- und/oder Insassensicherheit sein. Werden in den Gruppen nur QM-Verbraucher versorgt, so kann von einer für die Komfort-Verfügbarkeit hinreichend geringen Wahrscheinlichkeit eines Kurzschlusses während der Fahrt ausgegangen werden. Eine Kurzschlussabsicherung ist aber insbesondere in einem Crashfall relevant. Im Crashfall können ganze Verbraucher-Gruppen weggeschaltet werden, und zwar ohne Nutzungs-Beeinträchtigung. Die erfindungsgemäße Auswerteeinrichtung kann unterscheiden, ob eine Basislast von vielen Kanälen oder eine Überlast eines einzelnen Lastkanals vorliegt, die zur thermischen Zerstörung der angeschlossenen Leitung dieses Kanals führen kann. Grundsätzlich kann der Mechanismus zur Erkennung der thermischen Überlast einer Versorgungsleitung mittel Temperatur-Sensierung der Leiterbahnen auch für sicherheitskritische Verbraucher angewendet werden.

Bevorzugt kann die Auswerteeinrichtung wie folgt technisch umgesetzt sein: So kann die Auswerteeinrichtung für jede der auf der Leiterplatte applizierten Leiterbahnen, welche von der Schalteinheit zu den Stecker-Pins führen, eine Sensorik zur Erfassung der Leiterbahn-Temperaturen aufweisen. Dabei kann jeder der Leiterbahnen ein eigener Temperatursensor zugeordnet sein.

Die Auswerteeinrichtung kann zudem einen Berechnungsbaustein aufweisen, der auf der Grundlage der sensorisch erfassten Leiterbahn-Temperaturen die Versorgungsleitungs-Temperaturen berechnet. Die im Berechnungsbaustein berechneten Versorgungsleitungs-Temperaturen können in einem prozesstechnisch nachgeschalteten Vergleicherbaustein mit einem darin hinterlegten Temperatur-Grenzwert verglichen werden. Der Vergleicherbaustein erzeugt ein Abschaltsignal, sofern eine der Versorgungs-Leitungstemperaturen größer ist als der Temperatur-Grenzwert. Um den Rechenaufwand im Vergleicherbaustein zu reduzieren, ist es bevorzugt, wenn für sämtliche Versorgungsleitungs-Temperaturen genau ein gemeinsamer Temperatur-Grenzwert hinterlegt ist. Bei Vorliegen des Abschaltsignals schaltet die Schalteinheit die Lastgruppe mit dem fehlerhaften Lastpfad ab.

Die Auswerteeinrichtung startet den Auswerteprozess zur Prüfung der Versorgungsleitungen auf thermische Überlastung, sobald zumindest eine der Leiterbahn-Temperaturen eine Arbeitspunkt-Temperatur überschreitet. Die Arbeitspunkt-Temperatur ist kleiner als der Temperatur-Grenzwert bemessen. Die Arbeitspunkt-Temperatur könnte zum Beispiel 80°C betragen. Der Temperatur-Grenzwert für Standard PVC Leitungen beträgt 105°C. Eine kritische Temperatur wäre also erreicht, wenn ausgehend von der festgelegten Arbeitspunkt-Temperatur von 80°C ein zusätzlicher Temperatur-Anstieg von 25°C durch eine Stromlast erfolgt. Neben einem fixierten Arbeitspunkt ist es auch möglich einen variablen Arbeitspunkt zu verwenden. Dieser kann durch Messung der Referenztemperatur am Rand der PCB entfernt von den verlustbehafteten Leiterbahnen und Mosfet-Schaltern erfolgen. Das Temperatur-Anstiegs-Delta wird dann durch Subtraktion dieser Referenztemperatur von Leiterbahn-Temperatur ermittelt.

In einer konkreten Ausführungsform wird im Berechnungsbaustein der Auswerteeinrichtung eine Vektor-Berechnung durchgeführt. Hierzu ist in der Auswerteeinrichtung für jeden Lastkanal ein eigener, das heißt kanalspezifischer Gewichtungs-Vektor hinterlegt. Im Auswerteprozess werden ausgehend von der Arbeitspunkt-Temperatur die im weiteren Prozessverlauf sensorisch erfassten Temperatur-Anstiege der Leiterbahnen als Temperatur-Vektor bereitgestellt. Anhand des Temperatur-Vektors sowie anhand der kanalspezifischen Gewichtungs-Vektoren wird im Berechnungsbaustein mittels einer skalaren Vektor-Multiplikation für jede Versorgungsleitung der Temperatur-Anstieg (ausgehend von der Arbeitspunkt-Temperatur) berechnet. Aus der Summe der Arbeitspunkt-Temperatur und des Temperatur-Anstiegs ist die jeweilige Versorgungsleitungs-Temperatur bestimmbar. Die Arbeitspunkt-Temperatur ist entweder konstant festgelegt oder wird durch Messung der Temperatur am Rande der Leiterplatte bestimmt.

Der Schalteinheit kann zudem eine Kalibriereinrichtung zugeordnet sein, mittels der vor dem Betrieb der elektronischen Stromverteileranordnung ein Kalibrierprozess durchführbar ist. In dem Kalibrierprozess werden zum Abschluss der Entwicklung der Leiterplatte die Gewichtungsfaktoren einmalig bestimmt. Zum Start des Kalibrierprozesses werden die Leiterbahnen und die daran angeschlossenen Versorgungsleitungen elektrisch derart belastet, dass diese sich gemeinsam auf die Arbeitspunkt-Temperatur (zum Beispiel 80°C) erwärmen. Im Kalibrierprozess wird für jeden Lastkanal der kanalspezifische Gewichtungs-Vektor ermittelt.

Der Kalibrierprozess ist bevorzugt in einer Prozessabfolge durchführbar, bei der in einer Reihenfolge hintereinander für jeden Lastkanal ein Kalibierschritt stattfindet. Im Kalibrierschritt wird die Versorgungsleitung-Temperatur der jeweiligen Versorgungsleitung ausgehend von der Arbeitspunkt-Temperatur um einen vordefinierten Temperatur-Eingangssprung erhöht. Der Temperatur-Eingangssprung wird in einen kanalspezifischen Sprung-Vektor umgewandelt. In der Kalibriereinrichtung ist zudem ein Matrixbaustein vorgesehen, in dem die sensorisch erfassten Sprungantworten der Leiterbahnen für sämtliche Temperatur-Eingangssprünge in einer Matrix eingelesen werden. Auf der Grundlage der Matrix und der Sprung-Vektoren ermittelt ein Berechnungsbaustein die Gewichtungs-Vektoren **Ga** bis **Gd** für eine beispielhafte Gruppe von vier Lastkanälen, die mit einer Schalteinheit verbunden sind.

Die Temperatur-Eingangssprünge sind für jede Versorgungsleitung bevorzugt identisch. Zudem kann sich der Temperatur-Eingangssprung aus einer Differenz zwischen dem Temperatur-Grenzwert und der Arbeitspunkt-Temperatur ergeben.

**Figurenbeschreibung**

Nachfolgend ist ein Ausführungsbeispiel der Erfindung anhand der beigefügten Figuren beschrieben.
Es zeigen:

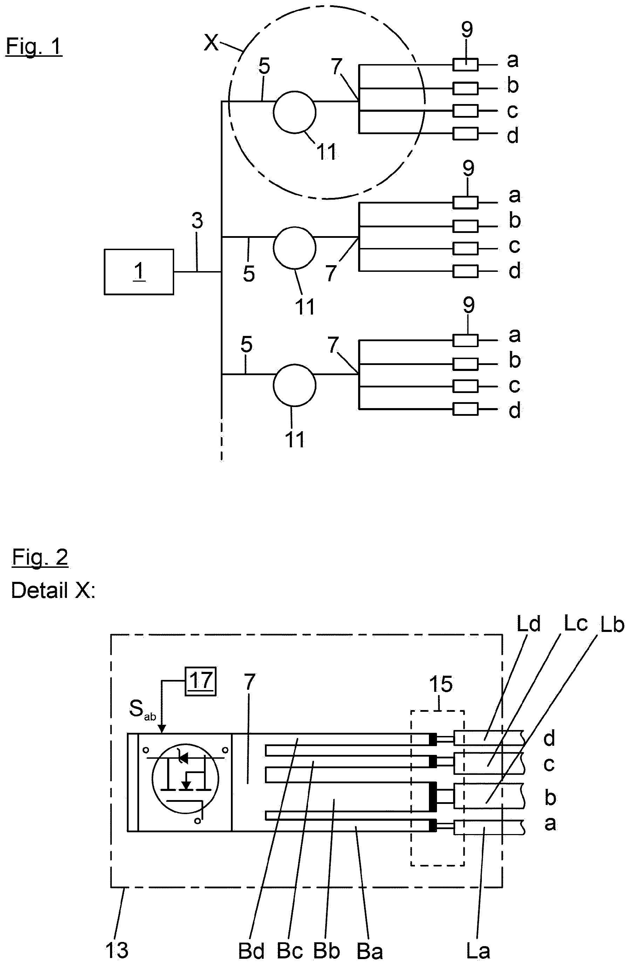

Figuren 1 bis 8     unterschiedliche Ansichten, anhand derer der Aufbau sowie die Funktionsweise der elektronischen Stromverteileranordnung veranschaulicht sind.

In den Figuren 1 und 2 ist eine elektronische Stromverteileranordnung angedeutet, die eine Bordnetz-Batterie 1 aufweist, deren Hauptlastkanal 3 sich in beispielhaft drei zueinander parallel geschaltete Lastpfade 5 aufteilt. Jeder der Lastpfade 5 teilt sich wiederum an einer Verzweigung 7 in eine Gruppe von insgesamt vier Lastkanäle a, b, c, d auf, an denen jeweils ein Verbraucher 9 angeschlossen ist. In der Figur 1 weist jeder der Lastpfade 5 eine Schalteinheit 11 auf, die als eine Transistor-Schaltung realisiert ist. Mithilfe der Schalteinheit 11 erfolgt eine Gruppenabsicherung, bei der jeder Schalteinheit 11 jeweils beispielhaft vier Lastkanäle a, b, c, d zugeordnet ist. In der Praxis können auch 20 Lastkanäle (a, b... bis s) in einer Gruppe einer Schalteinheit 11 zugeordnet sein.

Eine der Schalteinheiten 11 mit den zugeordneten Lastkanälen a, b, c, d ist in der Figur 2 in Detailansicht angedeutet. Demnach ist jeder der Lastkanäle a, b, c, d unterteilt in eine Leiterbahn Ba, Bb, Bc, Bd und in eine daran über einen modularen Stecker 15 angeschlossene Versorgungsleitung La, Lb, Lc, Ld, die jeweils zu Verbrauchern 9 führt. Sowohl die Transistor-Schaltung der Schaltereinheit 11 als auch die Leiterbahnen Ba, Bb, Bc, Bd sind auf einem Schaltungsträger beziehungsweise einer Leiterplatte 13 (d.h. printed circuit board) appliziert, während die Versorgungsleitungen La, Lb, Lc, Ld von der Leiterplatte 13 separat verlaufen. Die Versorgungsleitungen La bis Ld können als Kupferleitungen mit unterschiedlichen Querschnitten realisiert sein, beispielhaft mit 0,35 m$^2$, 0,5 mm$^2$ oder 6 mm$^2$.

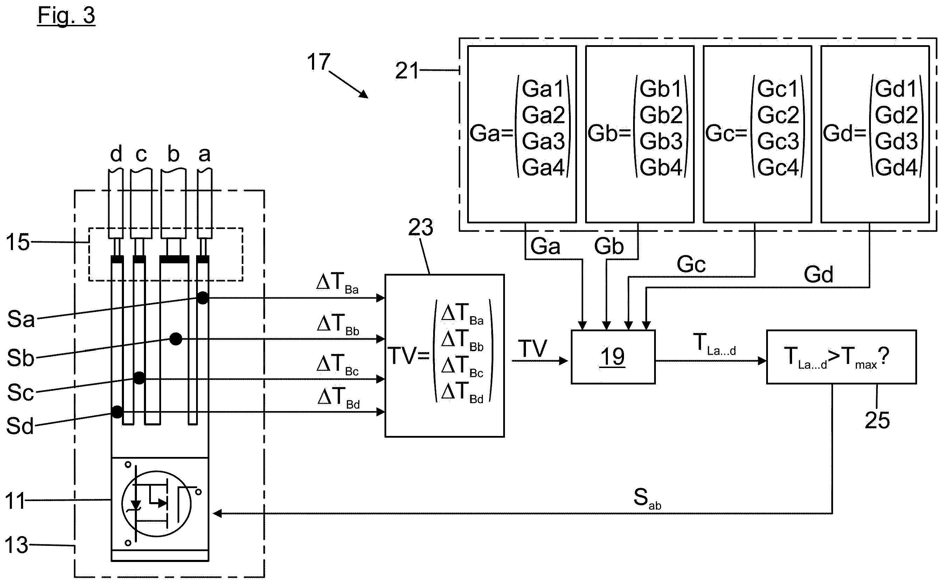

Die im Lastpfad 5 angeordnete Schalteinheit 11 ist so ausgelegt, dass bei einer thermischen Überlastung einer der Versorgungsleitungen La bis Ld der zugeordnete Gruppenpfad 5 stromlos geschaltet wird. Hierzu weist die Schalteinheit 11 eine Auswerteeinrichtung 17 auf, die bei Vorliegen einer thermischen Überlastung ein Abschaltsignal $S_{ab}$ generiert, mit dem die Schalteinheit 11 den Gruppenpfad 5 unterbricht. Die Softwarestruktur der Auswerteeinrichtung 17 mit den entsprechenden Programmbausteinen ist grob schematisch in einem Blockschaltbild der Figur 3 insoweit skizziert ist, als es zum Verständnis der Erfindung erforderlich ist.

Demnach weist die Auswerteeinrichtung 17 für jede Leiterbahn Ba bis Bd einen eigenen Temperatursensor Sa bis Sd auf. Die Auswerteeinrichtung 17 startet einen Auswerteprozess zur Prüfung der Versorgungsleitungen La bis Ld auf thermische Überlastung, sofern zumindest eine der sensorisch erfassten Leiterbahn-Temperaturen $T_{Ba}$ bis $T_{Bd}$ eine Arbeitspunkt-Temperatur $T_{AP}$ überschreitet, die beispielhaft bei 80°C liegt. Alternativ wird die Arbeitspunkt-Temperatur $T_{AP}$ über einen Temperatursensor am Rande der Leiterplatte gemessen oder es wird ein Sensor außerhalb der Leiterplatte, also außerhalb der Verteiler-Anordnung im jeweiligen Bauraum herangezogen. Das Temperatur-Anstiegs-Delta ergibt sich dann aus der Differenz der Sensortemperatur $S_{a-d}$ von der Arbeitspunkttemperatur $T_{AP}$:

$$\Delta T_{Ba} = T_{Sa} - T_{AP}$$

$$\Delta T_{Bb} = T_{Sb} - T_{AP}$$

$$\Delta T_{Bc} = T_{Sc} - T_{AP}$$

$$\Delta T_{Bd} = T_{Sd} - T_{AP}$$

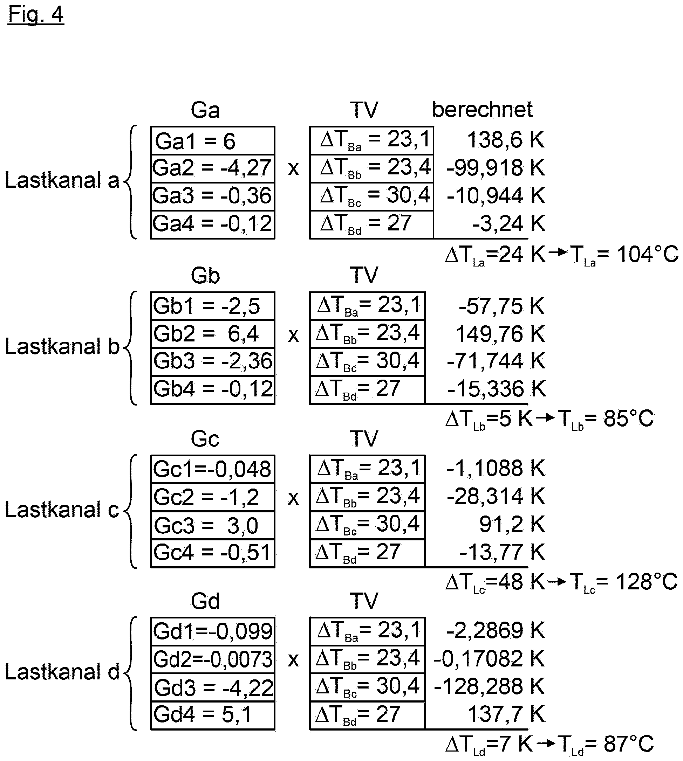

Die Auswerteinrichtung 17 weist einen Berechnungsbaustein 19 auf, in dem für jeden Lastkanal a bis d mittels einer Vektorgleichung (siehe Figur 4) die Versorgungsleitungs-Temperatur $T_{La}$ bis $T_{Ld}$ berechnet wird. Der Berechnungsbaustein 19 ist in der Figur 2 mit einer Datenbank 21 in Signalverbindung, von der für jeden Lastkanal a bis d ein kanalspezifischer Gewichtungs-Vektor **Ga** bis **Gd** in den Berechnungsbaustein 19 einlesbar ist. Außerdem weist die Auswerteeinrichtung 17 einen Vektor-Programmbaustein 23 auf, der die (von der Arbeitspunkt-Temperatur $T_{AP}$ ausgehenden) sensorisch erfassten Temperatur-Anstiege $\Delta T_{Ba}$ bis $\Delta T_{Bd}$ in eine Vektorstruktur zusammenfasst, d.h. als einen Temperatur-Vektor **TV** darstellt:

$$TV = [\Delta T_{Ba}, \Delta T_{Bb}, \Delta T_{Bc}, \Delta T_{Bd}]$$

Der Berechnungsbaustein 19 ermittelt aus dem Vektor-Skalar-Produkt von kanalspezifischem Gewichtungs-Vektor **Ga** und Temperatur-Vektor **TV** zunächst gewichtete Temperatur-Anstiege (in der Figur 4, rechte Spalte). Nach Addition der Arbeitspunkt-Temperatur $T_{AP}$ erhält man somit die Leitungstemperatur $T_{La-d}$.
Die einzelnen Leitungstemperaturen T La-d werden ermittelt nach:

$$T_{La} = TV * Ga + T_{AP}$$

$$T_{Lb} = TV * Gb + T_{AP}$$

$$T_{Lc} = TV * Gc + T_{AP}$$

$$T_{Ld} = TV * Gd + T_{AP}$$

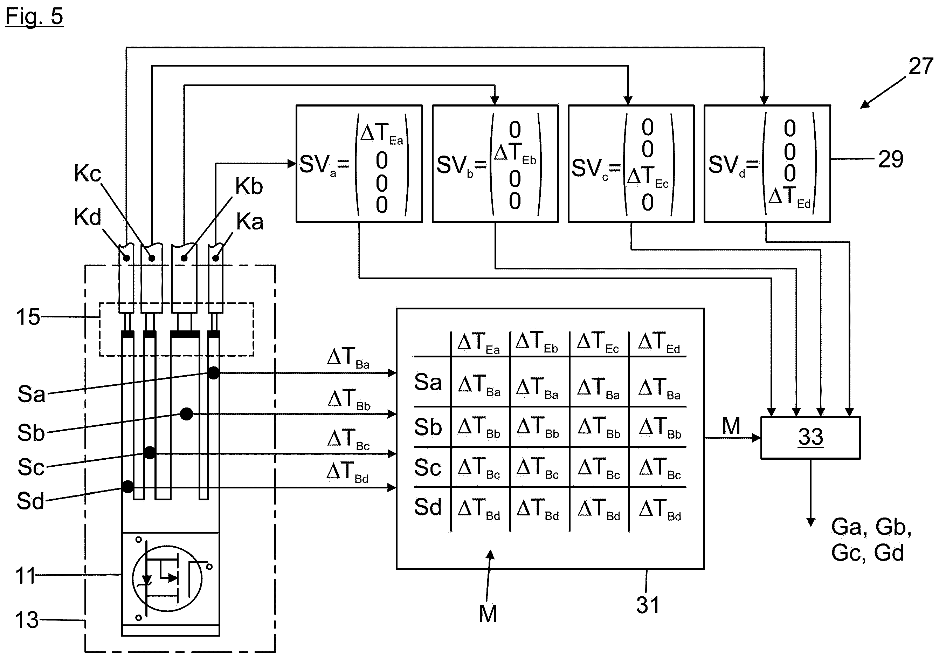

wobei $TV * G_x$ (x ε {a,d}) das Vektor-Skalarprodukt des Vektors aller gemessenen Leiterbahntemperaturen mit dem jeweiligen Gewichtungsvektor für den jeweiligen Lastkanal darstellt.
Gemäß der Figur 4 ergibt sich beispielhaft für den Lastkanal a folgendes: Der im Berechnungsbaustein 19 summiert die gewichteten Temperatur-Anstiege zu einem Temperatur-Anstieg $\Delta T_{LA}$ in der Versorgungsleitung La auf, der 24K beträgt. Dies resultiert bei einer Arbeitspunkt-Temperatur $T_{AP}$ von 80°C in einer Versorgungsleitungs-Temperatur $T_{LA}$. von 104°C.
Die Auswerteeinrichtung 17 weist in der Figur 2 außerdem einen Vergleicherbaustein 25 auf. Im Vergleicherbaustein 25 ist jede der im Berechnungsbaustein 23 berechneten Versorgungsleitungs-Temperaturen $T_{La}$ bis $T_{Ld}$ mit einem im Vergleicherbaustein 25 hinterlegten Temperatur-Grenzwert $T_{max}$ vergleichbar. Sofern eine der berechneten Versorgungsleitungs-Temperaturen $T_{La}$ bis $T_{Ld}$ größer ist als der Temperatur-Grenzwert $T_{max}$, erzeugt der Vergleicherbaustein 25 das Abschaltsignal $S_{ab}$. Bei Vorliegen des Abschaltsignals $S_{ab}$ schaltet die Schalteinheit 11 den Lastpfad 5 ab.
Beispielhaft kann der Temperatur-Grenzwert $T_{max}$ bei 105°C liegen. Entsprechend erkennt der Vergleicherbaustein 25, dass die Versorgungsleitungs-Temperatur $T_{Lc}$ (128°C gemäß der Figur 4) größer als der Temperatur-Grenzwert $T_{max}$ ist, so dass der Vergleicherbaustein 25 das Abschaltsignal $S_{ab}$ erzeugt.
Nachfolgend ist anhand der Figuren 5 bis 8 eine Kalibriereinrichtung 27 beschrieben, mit deren Hilfe vor dem Betriebsstart oder zum Ende der Entwicklung der Leiterplatte der Stromverteileranordnung ein Kalibrierprozess durchführbar ist. Im Kalibrierprozess wird für jeden Lastkanal a bis d der zugeordnete Gewichtungs-Vektor **Ga** bis **Gd** ermittelt. Hier wird wiederum beispielhaft von vier Lastpfaden a-d ausgegangen, es könnten auch z.B. bis zu 20 Lastkanäle (a, b... bis s) sein. Die Kalibriereinrichtung 27 weist in der Figur 5 Kalibriersensoren Ka bis Kd auf, mit deren Hilfe ein vordefinierter Temperatur-Eingangssprung $\Delta T_{Ea}$ bis $\Delta T_{Ed}$ überwachbar ist. Zudem weist die Kalibriereinrichtung 27 Vektor-Programmbausteine 29 auf, die jeden Temperatur-Eingangssprung $\Delta T_{Ea}$ bis $\Delta T_{Ed}$ in einen kanalspezifischen Sprung-Vektor SVa bis SVd umwandeln. In der Kalibriereinrichtung 27 ist außerdem ein Matrix-Baustein 31 vorgesehen, in dem die sensorisch erfassten Sprungantworten $\Delta T_{Ba}$ bis $\Delta T_{Bd}$ der Leiterbahnen Ba bis Bd in einer Matrix M zusammenfassbar sind.
Sowohl der Matrix-Baustein 31 als auch die Vektor-Programmbausteine 29 sind in Signalverbindung mit einem Berechnungsbaustein 33, der die Gewichtungs-Vektoren Ga bis Gd berechnet.
Vor dem Start des Kalibrierprozesses werden die Lastkanäle a bis d elektrisch so belastet, dass sie sich bis auf die Arbeitspunkt-Temperatur $T_{AP}$ (z.B. 80°C) erwärmen. Alternativ kann die Anordnung in einem Wärmeschrank auf 80°C erwärmt werden. In einer weiteren Ausführungsform ist der Arbeitspunkt variabel und wird durch eine Temperaturmessung am Rande der Leiterplatte 13, entfernt von den sich erwärmenden Leiterbahnen Ba bis Bd gemessen und in die Berechnungen mit einbezogen. Der Kalibrierprozess wird im Einzelnen wie folgt durchgeführt: In einer Reihenfolge hintereinander wird für jeden Lastkanal a bis d die Versorgungsleitungs-Temperatur $T_{La}$ bis $T_{Ld}$ der jeweiligen Versorgungsleitung La bis Ld ausgehend von einem Grundzustand der gemeinsamen Arbeitspunkt-Temperatur $T_{AP}$ um einen vordefinierten Temperatur-Eingangssprung $\Delta T_{Ea}$ bis $\Delta T_{Ed}$ (z.B. 25K) durch einen Laststrom erhöht. Daraus ergeben sich die sensorisch erfassten Sprungantworten $\Delta T_{Ba}$ bis $\Delta T_{Bd}$ der Leiterbahnen Ba bis Bd, die im Matrix-Baustein 31 in die Matrix M eingelesen werden. Es wird also für jeden Versorgungspfad a-d eine Einzel-Bestromung vorgenommen und die thermische Sprungantwort aller Sensoren $S_{a-d}$ als Reaktion auf den Leitungstemperatur-Anstieg $\Delta T_{Ea}$ der einzeln bestromten Leitung aufgenommen.

Der Temperatur-Eingangssprung $\Delta T_{Ea}$ bis $\Delta T_{Ed}$ wird typischerweise fest auf 25°C oder 25 Kelvin festgelegt. Die Temperaturanstiege $\Delta T_{Ba}$ bis $\Delta T_{Bd}$ auf den Leiterbahnen Ba bis Bd ergeben sich aus folgender Gleichung: $\Delta T_{Bx} = T_{Sx} - T_{AP}$ , d.h. aus der Differenz der gemessenen Temperatur Tsx; $x \, \varepsilon \, \{a,d\}$ mit der Arbeitspunkt-Temperatur $T_{AP}$, die entweder fest auf typischerweise 80°C gelegt ist, oder die über eine Referenzmessung am Rand der Leiterplatte 13 bestimmt wird.

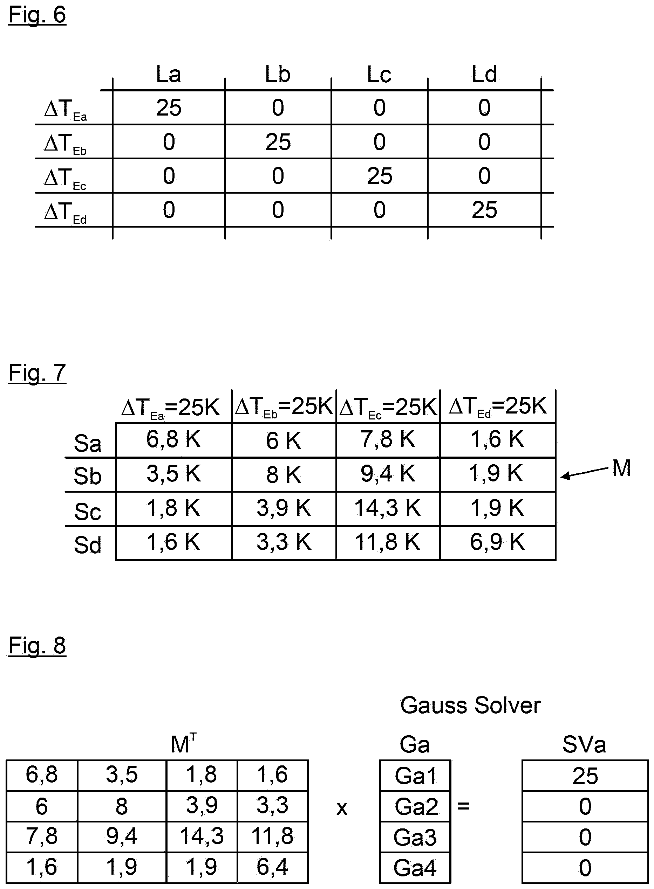

Die Matrix M wird im Berechnungsbaustein 33 zu einer Matrix $M^T$ transponiert. Zudem stellt der Berechnungsbaustein 33 für jeden Lastkanal a bis d eine Matrizengleichung bereit. Von diesen Matrizengleichungen ist in der Figur 8 beispielhaft die Matrizengleichung für den Lastkanal a gezeigt, aus der sich zum Beispiel unter Anwendung des Gauß-Verfahrens (d.h. Gauß-Solver) der Gewichtungs-Vektor **Ga** berechnen lässt. Während des einmaligen Kalibrierungsprozesses müssen also über den Gauß-Solver die Gewichtungsvektoren $\mathbf{G_x}$ (**Ga** bis **Gd**, x hier exemplarisch a bis d) derart bestimmt werden, dass sie jeweils der Matrizengleichung $\mathbf{M^T * G_x = SV_x}$ genügen.

Die in der Figur 8 gezeigte Matrizengleichung enthält auf der linken Seite ein Matrix-Vektor-Produkt aus der transponierten Matrix $M^T$ und dem Gewichtungs-Vektor Ga; auf der rechten Seite befindet sich der kanalspezifische Sprung-Vektor **SVa**. Die Vektoren $\mathbf{SV_x}$ entsprechen also

$$\mathbf{SVa} = [25,0,0,0]$$

$$\mathbf{SVb} = [0,25,0,0]$$

$$\mathbf{SVc} = [0,0,25,0]$$

$$\mathbf{SVd} = [0,0,0,25],$$

und zwar entsprechend der 25°C stationärer Erwärmung unter der so eingestellten Einzelbelastung der Leitungen La bis Ld.

Sind die geschalteten Gruppen nach Figur 1 thermisch untereinander hinreichend unabhängig, so kann für jede Gruppe eine (hier $4 \times 4$) Matrixgleichung gelöst werden. Stehen alle Gruppen mit ihren Leiterbahnen in einer starken thermischen Wechselwirkung, so erhält man ein genaueres Ergebnis, wenn über alle Leiterbahnen bzw. Lastpfade eine ($12 \times 12$) Matrizengleichung gelöst wird (für 3 mal 4 Lastpfade).

BEZUGSZEICHENLISTE

| | |
|---|---|
| 1 | Bordnetz-Batterie |
| 3 | Hauptlastkanal |
| 5 | Lastpfad |
| 7 | Verzweigung |
| 9 | Verbraucher |
| 11 | Schalteinheit |
| 13 | Leiterplatte |
| 15 | Steckereinheit |
| 17 | Auswerteeinrichtung |
| 19 | Berechnungsbaustein |
| 21 | Datenbank |
| 23 | Vektor-Programmbaustein |
| 25 | Vergleicherbaustein |
| 27 | Kalibriereinrichtung |
| 29 | Vektor-Programmbaustein |
| 31 | Matrix-Baustein |
| 33 | Berechnungsbaustein |
| a bis d | Lastkanal |
| Ba bis Bd | Leiterbahn |
| La bis Ld | Versorgungsleitung |
| Sa bis Sd | Temperatursensor |
| Ka bis Kd | Kalibrier-Temperatursensor |
| $T_{Ba}$ bis $T_{Bd}$ | Leiterbahn-Temperatur |
| $T_{La}$ bis $T_{Ld}$ | Versorgungsleitungs-Temperatur |
| Ga bis Gd | Gewichtungs-Vektor |
| TV | Temperatur-Vektor |
| $T_{max}$ | Temperatur-Grenzwert |
| $\Delta T_{Ea}$ bis $\Delta T_{Ed}$ | Temperatur-Eingangssprung |
| SVa bis SVd | Sprung-Vektor |
| M | Matrix |
| $M^T$ | transponierte Matrix |
| $S_{ab}$ | Abschaltsignal |

**Patentansprüche**

1. Elektronische Stromverteileranordnung für ein Fahrzeug-Bordnetz, mit zumindest einem von einer Bordnetz-Batterie (1) kommenden Lastpfad (5), der sich in zumindest einen oder mehr Lastkanäle (a, b, c, d) aufteilt, an die jeweils elektrische Verbraucher (9) angeschlossen sind, wobei jeder der Lastkanäle (a, b, c, d) unterteilt ist in eine auf eine Leiterplatte (13) applizierte Leiterbahn (Ba, Bb, Bc, Bd) und in eine daran, insbesondere über eine Steckereinheit (15) angeschlossene, insbesondere nicht auf der Leiterplatte (13) applizierte, zum Verbraucher (9) führende Versorgungsleitung (La, Lb, Lc, Ld), wobei der Lastpfad (5) eine Schalteinheit (11) aufweist, die bei einer thermischen Überlastung einer der Versorgungsleitungen (La, Lb, Lc, Ld) den Lastpfad (5) abschaltet, und wobei insbesondere die Schalteinheit (11) eine auf der Leiterplatte (13) applizierte Transistor-Schaltung ist, **dadurch gekennzeichnet, dass** der Schalteinheit (11) eine Auswerteeinrichtung (17) zugeordnet ist, mittels der auf der Grundlage der Leiterbahn-Temperaturen ($T_{Ba}$, $T_{Bb}$, $T_{Bc}$, $T_{Bd}$) der Leiterbahnen (Ba, Bb, Bc, Bd) auf eine thermische Überlastung einer der Versorgungsleitungen (La, Lb, Lc, Ld) rückschließbar ist.

2. Elektronische Stromverteileranordnung nach Anspruch 1, **dadurch gekennzeichnet, dass** die Auswerteeinrichtung (17) für jede der Leiterbahnen (Ba, Bb, Bc, Bd) eine Sensorik zur Erfassung der Leiterbahn-Temperaturen ($T_{Ba}$, $T_{Bb}$, $T_{Bc}$, $T_{Bd}$) aufweist, und/oder dass insbesondere jeder der Leiterbahnen (Ba, Bb, Bc, Bd) ein eigener Temperatursensor (Sa bis Sd) zugeordnet ist.

3. Elektronische Stromverteileranordnung nach Anspruch 1 oder 2, **dadurch gekennzeichnet, dass** die Auswerteeinrichtung (17) einen Berechnungsbaustein (19) aufweist, der auf der Grundlage der bevorzugt sensorisch erfassten Leiterbahn-Temperaturen ($T_{Ba}$, $T_{Bb}$, $T_{Bc}$, $T_{Bd}$) die Versorgungsleitungs-Temperaturen ($T_{La}$ bis $T_{Ld}$) berechnet.

4. Elektronische Stromverteileranordnung nach Anspruch 3, **dadurch gekennzeichnet, dass** die Auswerteeinrichtung (17) einen Vergleicherbaustein (25) aufweist, mittels dem die Versorgungsleitungs-Temperaturen ($T_{La}$, $T_{Lb}$, $T_{Lc}$, $T_{Ld}$) mit einem im Vergleicherbaustein (25) hinterlegten Temperatur-Grenzwert ($T_{max}$) vergleichbar sind, und dass insbesondere mittels des Vergleicherbausteins (25) ein Abschaltsignal ($S_{ab}$) erzeugbar ist, sofern eine der Versorgungsleitungs-Temperaturen ($T_{La}$, $T_{Lb}$, $T_{Lc}$, $T_{Ld}$) größer als der Temperatur-Grenzwert ($T_{max}$) ist, und dass insbesondere bei Vorliegen des Abschaltsignals ($S_{ab}$) die Schalteinheit (11) den Lastpfad (5) abschaltet.

5. Elektronische Stomverteileranordnung nach einem der vorhergehenden Ansprüche, **dadurch gekennzeichnet, dass** die Auswerteeinrichtung (17) einen Auswerteprozess zur Prüfung der Versorgungsleitungen (La, Lb, Lc, Ld) auf thermische Überlastung startet, sofern zumindest eine der Leiterbahn-Temperaturen ($T_{Ba}$, $T_{Bb}$, $T_{Bc}$, $T_{Bd}$) eine Arbeitspunkt-Temperatur ($T_{AP}$) überschreitet, und dass insbesondere die Arbeitspunkt-Temperatur ($T_{AP}$) kleiner als der Temperatur-Grenzwert ($T_{max}$) bemessen ist.

6. Elektronische Stromverteileranordnung nach Anspruch 5, **dadurch gekennzeichnet, dass** in der Auswerteeinrichtung (17) für jeden Lastkanal (a, b, c, d) ein eigener, das heißt kanalspezifischer Gewichtungs-Vektor (Ga, Gb, Gc, Gd) hinterlegt ist, und dass im Auswerteprozess ausgehend von der Arbeitspunkt-Temperatur ($T_{AP}$) die sensorisch erfassten Temperatur-Anstiege ($\Delta T_{Ba}$, $\Delta T_{Bb}$, $\Delta T_{Bc}$, $\Delta T_{Bd}$) der Leiterbahnen (Ba, Bb, Bc, Bd), insbesondere in einem Vektor-Programmbaustein (23), als ein Temperatur-Vektor (TV) darstellbar sind, und dass der Berechnungsbaustein (19) anhand des Temperatur-Vektors (TV) und anhand der kanalspezifischen Gewichtungs-Vektoren (Ga, Gb, Gc, Gd), insbesondere mittels eines Vektor-Skalarproduktes, den Temperatur-Anstieg ($\Delta T_{La}$, $\Delta T_{LB}$, $\Delta T_{Lc}$, $\Delta T_{Ld}$) für jede Versorgungsleitung (La, Lb, Lc, Ld) berechnet, und dass aus der Summe der Arbeitspunkt-Temperatur ($T_{AP}$) und des jeweiligen Temperatur-Anstiegs ($\Delta T_{La}$, $\Delta T_{Lb}$, $\Delta T_{Lc}$, $\Delta T_{Ld}$) die Versorgungsleitungs-Temperatur ($T_{La}$, $T_{Lb}$, $T_{Lc}$, $T_{Ld}$) bestimmbar ist.

7. Elektronische Stromverteileranordnung nach Anspruch 6, **dadurch gekennzeichnet, dass** der Schalteinheit (11) eine Kalibriereinrichtung (27) zugeordnet ist, mittels der ein Kalibrierprozess durchführbar ist, dass im Kalibrierprozess für jeden Lastkanal (a, b, c, d) der kanalspezifische Gewichtungs-Vektor (Ga, Gb, Gc, Gd) ermittelbar ist, und/oder dass insbesondere zum Start des Kalibrierprozesses die Leiterbahnen (Ba bis Bd) und die Versorgungsleitungen (La bis Ld) bis auf die Arbeitspunkt-Temperatur ($T_{AP}$) erwärmbar ist.

8. Elektronische Stromverteileranordnung nach Anspruch 7, **dadurch gekennzeichnet, dass** im Kalibrierprozess in einer Prozessabfolge hintereinander, für jeden Lastkanal (a, b, c, d) separat ein Kalibrierschritt durchführbar ist, in dem die Versorgungsleitungs-Temperatur ($T_{La}$, $T_{Lb}$, $T_{Lc}$, $T_{Ld}$) der jeweiligen Versorgungsleitung (La, Lb, Lc, Ld) ausgehend von der Arbeitspunkt-Temperatur ($T_{AP}$) um einen vordefinierten Temperatur-Eingangssprung ($\Delta T_{Ea}$, $\Delta T_{Eb}$, $\Delta T_{Ec}$, $\Delta T_{Ed}$) erhöhbar ist, dass ein Vektor-Programmbaustein aus jedem der Temperatur-Eingangssprünge ($\Delta T_{Ea}$, $\Delta T_{Eb}$, $\Delta T_{Ec}$, $\Delta T_{Ed}$) einen kanalspezifischen Sprung-Vektor (SVa, SVb, SVc, SVd) bildet, dass die Kalibriereinrichtung (27) einen Matrix-Baustein (31) aufweist, in dem die sensorisch erfassten Sprungantworten ($\Delta T_{Ba}$, $\Delta T_{Bb}$, $\Delta T_{Bc}$, $\Delta T_{Bd}$) der Leiterbahnen (La, Lb, Lc, Ld) sämtlicher Temperatur-Eingangssprünge ($\Delta T_{Ea}$, $\Delta T_{Eb}$,

$\Delta T_{Ec}$, $\Delta T_{Ed}$) in einer Matrix (M) zusammenfassbar sind, und dass die Kalibriereinrichtung (27) einen Berechnungsbaustein (33) aufweist, in dem für jeden Lastkanal (a, b, c, d) anhand der Matrix (M) und anhand des jeweiligen kanalspezifischen Sprung-Vektors (SVa bis SVd) der kanalspezifische Gewichtungs-Vektor (Ga, Gb, Gc, Gd) ermittelbar ist.

9. Verfahren zum Betreiben einer elektronischen Stromverteileranordnung für ein Fahrzeug-Bordnetz, insbesondere nach einem der vorhergehenden Ansprüche, mit zumindest einem von einer Bordnetz-Batterie (1) kommenden Lastpfad (5), der sich in einen oder mehrere Lastkanäle (a, b, c, d) aufteilt, an die jeweils elektrische Verbraucher (9) angeschlossen sind, wobei jeder der Lastkanäle (a, b, c, d) unterteilt ist in eine auf eine Leiterplatte (13) applizierte Leiterbahn (Ba, Bb, Bc, Bd) und in eine daran angeschlossene, zum Verbraucher (9) führende Versorgungsleitung (La, Lb, Lc, Ld), wobei der Lastpfad (5) eine Schalteinheit (11) aufweist, die bei einer thermischen Überlastung einer der Versorgungsleitungen (La, Lb, Lc, Ld) den Lastpfad (5) abschaltet, und wobei insbesondere das Schalteinheit (11) eine auf der Leiterplatte (13) applizierte Transistor-Schaltung ist, **dadurch gekennzeichnet, dass** der Schalteinheit (11) eine Auswerteeinrichtung (17) zugeordnet ist, mittels der auf der Grundlage der Leiterbahn-Temperaturen ($T_{Ba}$, $T_{Bb}$, $T_{Bc}$, $T_{Bd}$) der Leiterbahnen (Ba, Bb, Bc, Bd) auf eine thermische Überlastung einer der Versorgungsleitungen (La, Lb, Lc, Ld) rückgeschlossen wird.

Fig. 1

Fig. 2

Detail X:

Fig. 3

$$Ga=\begin{pmatrix}Ga1\\Ga2\\Ga3\\Ga4\end{pmatrix} \quad Gb=\begin{pmatrix}Gb1\\Gb2\\Gb3\\Gb4\end{pmatrix} \quad Gc=\begin{pmatrix}Gc1\\Gc2\\Gc3\\Gc4\end{pmatrix} \quad Gd=\begin{pmatrix}Gd1\\Gd2\\Gd3\\Gd4\end{pmatrix}$$

$$TV=\begin{pmatrix}\Delta T_{Ba}\\\Delta T_{Bb}\\\Delta T_{Bc}\\\Delta T_{Bd}\end{pmatrix}$$

$T_{La...d}>T_{max}?$

EP 4 624 265 A1

Fig. 4

|  | Ga | | TV | berechnet |
|---|---|---|---|---|
| Lastkanal a | Ga1 = 6 | x | $\Delta T_{Ba}$ = 23,1 | 138,6 K |
| | Ga2 = -4,27 | | $\Delta T_{Bb}$ = 23,4 | -99,918 K |
| | Ga3 = -0,36 | | $\Delta T_{Bc}$ = 30,4 | -10,944 K |
| | Ga4 = -0,12 | | $\Delta T_{Bd}$ = 27 | -3,24 K |

$\Delta T_{La}$=24 K → $T_{La}$= 104°C

|  | Gb | | TV | |
|---|---|---|---|---|
| Lastkanal b | Gb1 = -2,5 | x | $\Delta T_{Ba}$= 23,1 | -57,75 K |
| | Gb2 = 6,4 | | $\Delta T_{Bb}$= 23,4 | 149,76 K |
| | Gb3 = -2,36 | | $\Delta T_{Bc}$= 30,4 | -71,744 K |
| | Gb4 = -0,12 | | $\Delta T_{Bd}$= 27 | -15,336 K |

$\Delta T_{Lb}$=5 K → $T_{Lb}$= 85°C

|  | Gc | | TV | |
|---|---|---|---|---|
| Lastkanal c | Gc1=-0,048 | x | $\Delta T_{Ba}$= 23,1 | -1,1088 K |
| | Gc2 = -1,2 | | $\Delta T_{Bb}$= 23,4 | -28,314 K |
| | Gc3 = 3,0 | | $\Delta T_{Bc}$= 30,4 | 91,2 K |
| | Gc4 = -0,51 | | $\Delta T_{Bd}$= 27 | -13,77 K |

$\Delta T_{Lc}$=48 K → $T_{Lc}$= 128°C

|  | Gd | | TV | |
|---|---|---|---|---|
| Lastkanal d | Gd1=-0,099 | x | $\Delta T_{Ba}$= 23,1 | -2,2869 K |
| | Gd2=-0,0073 | | $\Delta T_{Bb}$= 23,4 | -0,17082 K |
| | Gd3 = -4,22 | | $\Delta T_{Bc}$= 30,4 | -128,288 K |
| | Gd4 = 5,1 | | $\Delta T_{Bd}$= 27 | 137,7 K |

$\Delta T_{Ld}$=7 K → $T_{Ld}$= 87°C

Fig. 5

EP 4 624 265 A1

## Fig. 6

|  | La | Lb | Lc | Ld |
|---|---|---|---|---|
| $\Delta T_{Ea}$ | 25 | 0 | 0 | 0 |
| $\Delta T_{Eb}$ | 0 | 25 | 0 | 0 |
| $\Delta T_{Ec}$ | 0 | 0 | 25 | 0 |
| $\Delta T_{Ed}$ | 0 | 0 | 0 | 25 |

## Fig. 7

|  | $\Delta T_{Ea}$=25K | $\Delta T_{Eb}$=25K | $\Delta T_{Ec}$=25K | $\Delta T_{Ed}$=25K |
|---|---|---|---|---|
| Sa | 6,8 K | 6 K | 7,8 K | 1,6 K |
| Sb | 3,5 K | 8 K | 9,4 K | 1,9 K |
| Sc | 1,8 K | 3,9 K | 14,3 K | 1,9 K |
| Sd | 1,6 K | 3,3 K | 11,8 K | 6,9 K |

← M

## Fig. 8

Gauss Solver

$M^T$

| 6,8 | 3,5 | 1,8 | 1,6 |
|---|---|---|---|
| 6 | 8 | 3,9 | 3,3 |
| 7,8 | 9,4 | 14,3 | 11,8 |
| 1,6 | 1,9 | 1,9 | 6,4 |

x

Ga

| Ga1 |
|---|
| Ga2 |
| Ga3 |
| Ga4 |

=

SVa

| 25 |
|---|
| 0 |
| 0 |
| 0 |

Europäisches
Patentamt

European
Patent Office

Office européen
des brevets

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2012 208115 A1 (DRAEXLMAIER LISA GMBH [DE]) 21. November 2013 (2013-11-21) | 1-5,9 | INV.<br>B60R16/03 |
| A | * Absatz [0024] - Absatz [0105]; Abbildungen 1-8 * | 6-8 | B60R16/033<br>H02H1/00 |
| | ----- | | H03K17/06 |
| A | DE 10 2021 126909 A1 (DRAEXLMAIER LISA GMBH [DE]) 20. April 2023 (2023-04-20) * Absatz [0052] - Absatz [0067]; Abbildungen 1-5 * | 1-9 | |
| | ----- | | |
| A | DE 10 2009 034825 A1 (KROMBERG & SCHUBERT GMBH & CO KG [DE]; VOLKSWAGEN AG [DE]) 3. Februar 2011 (2011-02-03) * Absatz [0035] - Absatz [0067]; Abbildungen 1-27 * | 1-9 | |
| | ----- | | |

RECHERCHIERTE
SACHGEBIETE (IPC)

B60R
H02H
H03K

Der vorliegende Recherchenbericht wurde für alle Patentansprüche erstellt

| Recherchenort | Abschlußdatum der Recherche | Prüfer |
|---|---|---|
| Den Haag | 9. September 2024 | Kamara, Amadou |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 24 16 7330

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-09-2024

| Im Recherchenbericht angeführtes Patentdokument | Datum der Veröffentlichung | Mitglied(er) der Patentfamilie | Datum der Veröffentlichung |
|---|---|---|---|
| DE 102012208115 A1 | 21-11-2013 | DE 102012208115 A1<br>US 2013321960 A1 | 21-11-2013<br>05-12-2013 |
| DE 102021126909 A1 | 20-04-2023 | CN 115991156 A<br>DE 102021126909 A1<br>EP 4167413 A1 | 21-04-2023<br>20-04-2023<br>19-04-2023 |
| DE 102009034825 A1 | 03-02-2011 | KEINE | |

Für nähere Einzelheiten zu diesem Anhang : siehe Amtsblatt des Europäischen Patentamts, Nr.12/82